# EUROPEAN PATENT APPLICATION

(11) **EP 2 945 077 A1**
(43) Date of publication of application: **18.11.2015**
(21) Application number: 15166013.1
(22) Date of filing: 30.04.2015
(51) Int. Cl.: G06F 17/30, G11B 27/034, H04N 7/18

(54) **METHOD AND APPARATUS FOR SEQUENCING METADATA EVENTS**

(30) Priority: 13.05.2014 EP 14305698
(71) Applicant: Thomson Licensing, 92130 Issy-les-Moulineaux (FR)
(72) Inventor: Brune, Thomas, 30449 Hannover (DE); Kamphenkel, Oliver, 31275 Lehrte (DE)
(74) Representative: Schmidt-Uhlig, Thomas

(57) **Abstract**

A method and an apparatus (20) for sequencing metadata events are described. A reception unit (21) receives (10) a plurality of metadata events. A sequence unit (22) then detects (11) temporal schemes of the metadata events and sequences (12) the metadata events according to a predetermined priority order of the detected temporal schemes of the metadata events.

## Description

### FIELD OF THE INVENTION

The present invention relates to a method and an apparatus for sequencing metadata events, specifically, in a temporal order.

### BACKGROUND OF THE INVENTION

In production industry, for example the movie production industry, data events are often arranged on a timeline according to their capture information for subsequent display or review purpose. The arrangement of data events like recorded video or audio files in a temporal sequence is generally easy, since there are standardized container formats being assigned to the files and providing escorting information such as start- and stop time-code, duration time or frame count numbers.

However, a proper temporal arrangement of data events like metadata is more complicated and tricky. This is due to the variety of partly non-standardized temporal register schemes assigned to different metadata items. If metadata is captured in computer files, one or more of the following well-known temporal register schemes might be arbitrarily used:
- Temporal schemes that are part of the metadata content (e.g. coded in XML): frame number references, start- and stop time-code, start- and duration time-code, start- and stop wall-clock time, start- and duration wall-clock time, etc.
- Temporal schemes that are coded within the file name or stream handle of the metadata: start frame number, start time-code, start wall-clock time, etc.
- File creation time of the metadata.

When the metadata events include video data, the temporal schemes, such as the frame number references, the actual time-codes, and the actual wall-clock time, can also be burned into the video data. If the metadata events are streamed rather than captured as files, the above register schemes, except those associated with file creation time, can be applied.

The temporal accuracies of the above mentioned and other register schemes are various and different. In general, the resolution and precision of those associated to a time-code are higher than those associated to a wall-clock time.

When several temporal schemes are applied to metadata events to be sequenced, there is one problem of the choice of specific schemes based on which the metadata events are sequenced. The sequence result of the metadata events would not be the same when different register scheme is used. In other words, the sequence result can be unreliable and non-repeatable.

### SUMMARY OF THE INVENTION

Therefore, it is an objective of the present invention to propose an improved solution for temporally sequencing metadata events. More specifically, the present invention provides a method and an apparatus for sequencing metadata events according to a priority order of the temporal schemes thereof.

According to the invention, a method for sequencing metadata events comprises:
- receiving a plurality of metadata events;
- detecting temporal schemes of the metadata events; and
- sequencing the metadata events according to a predetermined priority order of the temporal schemes.

Accordingly, an apparatus configured to sequence metadata events comprises:
- a reception unit configured to receive a plurality of metadata events; and
- a sequence unit configured to detect temporal schemes of the metadata events and to sequence the metadata events according to a predetermined priority order of the temporal schemes.

Also, a computer readable storage medium having stored therein instructions for sequencing metadata events, which when executed by a computer, cause the computer to:
- receive a plurality of metadata events;
- detect temporal schemes of the metadata events; and
- sequence the metadata events according to a predetermined priority order of the temporal schemes.

### BRIEF DESCRIPTION OF THE DRAWINGS

For a better understanding the invention shall now be explained in more detail in the following description with reference to the figures. It is understood that the invention is not limited to this disclosed exemplary embodiments and that specified features can also expediently be combined and/or modified without departing from the scope of the present invention as defined in the appended claims. In the figures:
- Fig. 1: is a flow chart illustrating one preferred embodiment of the method according to the present invention.
- Fig. 2: is a flow chart illustrating another preferred embodiment of the method according to the present invention.
- Fig. 3: is a schematic diagram illustrating an apparatus configured to perform the method according to this invention.

### DETAILED DESCRIPTION OF PREFERRED EMBODIMENTS

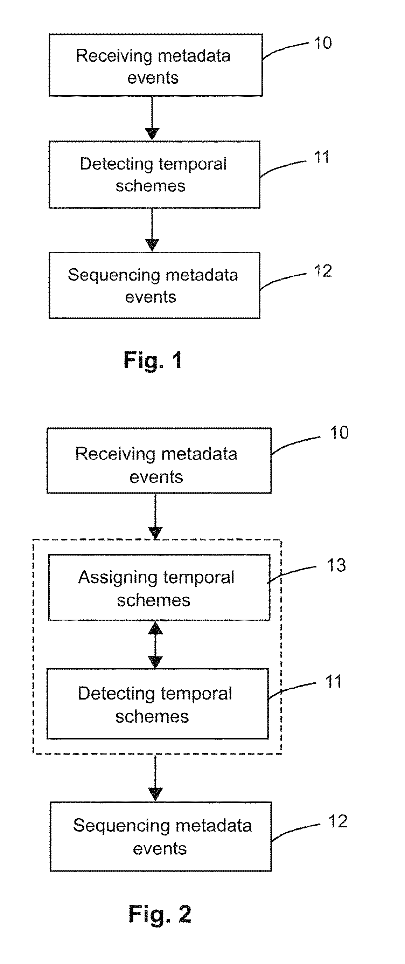

Fig. 1 schematically illustrates a preferred embodiment of the method for sequencing metadata events according to the present invention, which comprises: receiving 10 a plurality of metadata events; detecting 11 temporal schemes of the metadata events; and sequencing 12 the metadata events according to a predetermined priority order of the temporal schemes.

The metadata events denoted in this invention can be any kind of metadata events that are associated to different types of data events. Optionally, the metadata events can be associated to at least one data event of a type selected from the group consisting of image, audio data, video data, machine, and industrial process. For example, the metadata events can be associated to image, video, and audio data events when it comes to the application in the movie production industry or the consumer product industry.

The detection 11 of temporal schemes of the metadata events can be performed respectively on each of the metadata events or on several metadata events at a same time. Of course, any methods or techniques known in the field can be applied to and used for the detection.

Optionally, the method can further comprise assigning 13 temporal schemes to the metadata events, as shown in Fig. 2. This step of assigning 13 can be combined with the step of detecting 11 temporal schemes of the metadata events. In other words, each of the received metadata events can be originally associated with several temporal schemes, or the schemes can be manually assigned thereto by a user if there is a need. After the assignment 13 and detection 11 of the temporal schemes to the metadata events, these metadata events are to be sequenced 12 according to a predetermined priority order of the temporal schemes. One example of temporal sequencing is to sequence the metadata events to a time-code based timeline. Of course, the priority order can be predetermined manually by a user for different demands or automatically by a device.

One preferred embodiment of the method for sequencing metadata events according to this invention is applied when the metadata events are associated to at least one video data event. That is, the metadata events are used to describe individual information or are a collection of varied information of the video data, by which they can facilitate the understanding, classification, and management of the video data. In this case, the temporal schemes of the metadata events are preferably related to one of a time-code, frame count information, and a wall-clock time. More preferably, the priority order of the temporal schemes is those related to a time-code, followed by those related to frame count information, and at last those related to a wall-clock time. Additionally, if the file creation time of the metadata event is available, the priority thereof should be lower than that related to a wall-clock time.

The wall-clock time, or wall-time, is referred to a measure of the real time from the start to the completion of a task performed by a computer, which is well-known in the field. In this embodiment, it is preferably referred to a local time of the location where the metadata are captured. Optionally, a system time representing a computer system's notion of the passing of time can be used instead. With the widespread availability of computer networks nowadays, it is preferable that the system time is correlated to the wall-clock time, and thus it covers the UTC when the metadata are captured from different locations of the world with different time zones.

In particular, the metadata events are preferably checked and sequenced according to the following priority order of the temporal schemes thereof:
1. A temporal context that is manually assigned to a metadata event;
2.If the metadata event includes video data, the actual time-codes that are burned into the video data;
3. If the metadata event includes video data, the frame number references that are burned into the video data;
4.The start- and stop time-code or start- and duration time-code that is part of the content of the metadata events (e.g. coded in XML);
5.The start time-code that is coded within the file name or stream handle of the metadata events;
6.The frame number references that is part of the content of the metadata events (e.g. coded in XML);
7.The start- or stop frame number that is coded within the file name or stream handle of the metadata events;
8. If the metadata event includes video data, the actual wall-time that is burned into the video data;
9.The start- and stop wall-time or start- and duration wall-time that is part of the content of the metadata events (e.g. coded in XML);
10.The start- or stop wall-time that is coded within the file name or stream handle of the metadata events;
11.The file creation time of the metadata events.

The metadata events to be sequenced are first checked and detected 11 to see which of the above temporal schemes are associated thereto. If the temporal schemes are insufficient or if there is a need for additional temporal schemes, it is possible to manually assign 13 extra temporal schemes to the metadata events, and the assigned temporal context is preferably with a highest priority among others. Subsequent to the manually assigned temporal context, those temporal schemes related to a time-code generally have a higher priority than those related to frame count information. If none of these temporal schemes are available, those related to a wall-clock time or the file creation time can also be used, although they are less precise.

The above preferred priority order of the temporal schemes is derived basically from the experience known in the field. Besides the manual assignment of metadata events in a timeline, reference information burned into the video event is generally considered the most exact temporal scheme, followed by reference information coded within files or streams of the video event (e.g. coded in XML, html, file headers or -footers, or other provisions in file- or streaming formats). There is very limited space for reference information coded within filename of the video event.

In addition, the preferred priority order is also derived from the fact that the resolution and accuracy of temporal schemes related to a time-code are generally the best. Temporal schemes related to frame count information is of similar resolution and accuracy, but sometimes there is no additional information available to link the frame count information to a time-code. Those temporal schemes related to a wall-clock time have a poor resolution compared to the others. The implementation of a wall-clock time in different devices is often poorly synchronized, which results in an unreliable temporal scheme. One optional approach to compensate for the above drawbacks is the placement of wall-clock time within a time-code-based timeline while the frame unit is set as zero, or vice versa.

Certain steps of the above priority order list can be skipped for some specific cases. For example, when an image analysis cannot be operated to detect burn-in time or frame count information of the metadata events, the steps of 1, 2 and 7 can be skipped. When a reference mapping between time-code and frame count information of the metadata events is not available, the steps of 2, 4 and 6 would become impractical and can be skipped.

In other preferred embodiments of the method for sequencing metadata events according to this invention, the metadata events can also be associated to machines or industrial processes. In these cases, the parallel processes or machines are preferably either registered to or controlled with a time-code or a wall-clock system. Besides, these processes or machines preferably generate data events or files when reporting about started and finished process cycles with respect to a time-code or a wall-clock.

One exemplary implementation is for the printing industry where several consecutive wheels transport papers and an observation camera is placed to monitor the wheels. Each wheel controller periodically write log files with a file creation date and/or time-stamps about the status, e.g. speed, of the individual wheel. The time-relevant information is normally derived from an independent system clock running within the wheel controllers. The camera captures images, into each of which synchronized time stamp is generally in-painted. It would be essential for a recorder or central controller to order and correlate all the metadata events from both the individual wheels and the associated camera images. By implementing the method of this invention, the various metadata events can be easily sequenced and managed according to the timestamps thereof and a preferable priority of the temporal schemes.

According to the method of the present invention described above, the sequencing of metadata events can be improved to achieve a higher resolution and accuracy, even when the metadata events are provided with multiple temporal schemes. In addition, the priority order of the temporal schemes can be arbitrarily determined by a user or a device, based on various demands and requirements. While a higher accuracy of the temporal sequencing might generally be the most important expectation, other specific target for the sequencing of the metadata events can also be achieved by the flexible priority order of the temporal schemes.

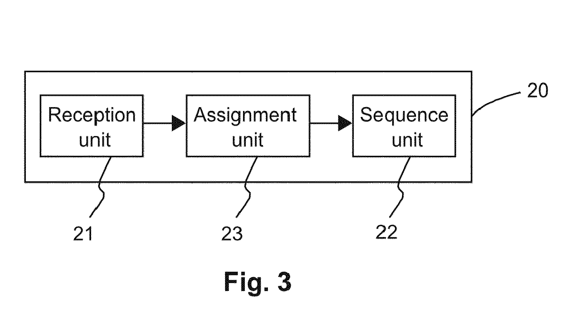

An apparatus 20 configured to perform the method for sequencing metadata events according to the present invention is schematically depicted in Fig. 3. The apparatus 20 comprises a reception unit 21 configured to receive a plurality of metadata events, and a sequence unit 22 configured to detect temporal schemes of the metadata events and to sequence the metadata events according to a predetermined priority order of the temporal schemes. Optionally, the apparatus 20 can further comprise an assignment unit 23 configured to assign temporal schemes to the metadata events. It should be understood that the sequence unit 22 can refer to any devices that is able to perform the detection 11 and sequencing 12 of the metadata events. Similarly, the assignment unit 23 can refer to any devices by which a user can use and manually assign arbitrary temporal schemes to the metadata events.

## Claims

1. A method implemented in an apparatus for sequencing metadata events, comprising:
- receiving (10) a plurality of metadata events;
- detecting (11) temporal schemes of the metadata events; and
- sequencing (12) by the apparatus the metadata events according to a predetermined priority order of the detected temporal schemes of the metadata events.

2. The method according to claim 1, further comprising assigning (13) temporal schemes to the metadata events.

3. The method according to claim 1, wherein the metadata events are associated to at least one data event of a type selected from the group consisting of image, audio data, video data, machine, and industrial process.

4. The method according to any one of the preceding claims, wherein the metadata events are associated to at least one video data event, and the temporal schemes are related to one of a time-code, frame count information, and a wall-clock time.

5. The method according to claim 4, wherein the predetermined priority order of the temporal schemes is those related to a time-code, those related to frame count information, and those related to a wall-clock time.

6. The method according to claim 4, wherein the temporal schemes are selected from the group consisting of the actual time-codes, the frame number references, the actual wall-time that is burned into the video data event, the start- and stop time-code, the start- and duration time-code, the frame number references, the start- and stop wall-time, the start- and duration wall-time that is part of the content of the metadata events, the start time-code, the start- or stop frame number, the start- or stop wall-time that is coded within the file name or stream handle of the metadata events, and the file creation time of the metadata events.

7. An apparatus (20) configured to sequence metadata events, comprising:
- a reception unit (21) configured to receive a plurality of metadata events; and
- a sequence unit (22) configured to detect temporal schemes of the metadata events and to sequence the metadata events according to a predetermined priority order of the detected temporal schemes of the metadata events.

8. The apparatus (20) according to claim 7, further comprising an assignment unit (23) configured to assign temporal schemes to the metadata events.

9. A computer readable storage medium having stored therein instructions for sequencing metadata events, which when executed by a computer, cause the computer to:
- receive a plurality of metadata events;
- detect temporal schemes of the metadata events; and
- sequence the metadata events according to a predetermined priority order of the detected temporal schemes of the metadata events.
